# EUROPÄISCHE PATENTSCHRIFT

(11) **EP 3 668 630 B1**
(45) Veröffentlichungstag und Bekanntmachung des Hinweises auf die Patenterteilung: **29.09.2021**
(21) Anmeldenummer: 18755803.6
(22) Anmeldetag: 15.08.2018
(51) Int. Cl.: B01D 35/16, B01D 35/153, B01D 27/10, B01D 27/08

(54) **FILTERELEMENT MIT STIRNSEITIGER STANDHILFE**
FILTER ELEMENT HAVING AN END-SIDE STAND
ÉLÉMENT FILTRANT COMPRENANT UN SUPPORT FRONTAL

(30) Priorität: 15.08.2017 DE 102017007653; 15.08.2017 DE 102017007654
(43) Veröffentlichungstag der Anmeldung: 24.06.2020
(73) Patentinhaber: MANN+HUMMEL GmbH, 71636 Ludwigsburg (DE)
(72) Erfinder: LINHART, Jochen, 71409 Schwaikheim (DE); TRAUBLINGER, Martin, 84088 Neufahrn (DE); ERHARDSBERGER, Florian, 94436 Simbach (DE); SRINIVAS, Mahesh, Bangalore 560076 (IN); PAUL KALLUMGAL, Basil, Bangalore 560036 (IN); RAJAGOPAL, Nandakumar, 56022 Bangalore (IN)
(74) Vertreter: Mann + Hummel Intellectual Property
(86) Internationale Anmeldenummer: PCT/EP2018/072104
(87) Internationale Veröffentlichungsnummer: WO 2019/034683

(56) Entgegenhaltungen:
- EP-A1- 2 703 056
- EP-A1- 3 120 914
- WO-A1-2009/083285

## Beschreibung

### Technisches Gebiet

Die Erfindung betrifft ein Filterelement für die Filtration eines Fluids, insbesondere Kraftstoff oder Öl, insbesondere für den Verbrennungsmotor eines Kraftfahrzeugs. Das Filterelement weist ein Verschlusselement auf, mittels dessen ein Leerlaufkanal eines zum Anschluss des Filterelements vorgesehenen Filterkopfs verschließbar ist. Das Verschlusselement ist an einer Stirnseite des Filterelements relativ zur Längsachse des Filterelements exzentrisch angeordnet und erstreckt sich von der Stirnseite des Filterelements in axialer Richtung weg.

### Stand der Technik

Die vorgenannten Filterelemente können nach einer Bauart in einem offenbaren Filtergehäuse mit einem Filterkopf und einem am Filterkopf befestigbaren Gehäuseteil, beispielsweise einem Gehäusedeckel, eingesetzt werden. Ein solches Filterelement ist beispielsweise aus DE 20 2012 000 417 U1 bekannt geworden. Darüber hinaus sind Filterelemente am Markt auch als sog. Wechselfilterpatronen bzw. -kartuschen verfügbar. Bei diesen Filterelementen ist ein Filtereinsatz unverlierbar in einem Gehäuseteil angeordnet und bildet mit diesem eine einfach handzuhabende Baueinheit. Das Filterelement kann mit seinem Gehäuseteil am Filterkopf unmittelbar angeschraubt werden und wird im Falle eines Austauschs mitsamt dem Gehäuseteil entsorgt.

DE 10 2015 103 662 A1 offenbart einen Filter mit einem Filtergehäuse und mit einem eine Rohseite und eine Reinseite des Filters voneinander trennenden, austauschbaren Filtereinsatz. Das Filtergehäuse besitzt eine exzentrische Entleerungsöffnung in seinem Boden. Zum Verschließen der Entleerungsöffnung dient ein Dichtelement, welches an einer Unterseite einer unteren Stirnscheibe des Filtereinsatzes angeformt sein kann. Der Filtereinsatz ist im montierten Zustand mit einer in seiner unteren Stirnscheibe vorgesehenen zentralen Öffnung auf einen rohrstutzenförmigen Auslass des Filtergehäuses aufgesteckt. Eine Radialdichtung des Filtereinsatzes umgibt die zentrale Öffnung in der unteren Stirnscheibe. Im montierten Zustand liegt die Radialdichtung an dem rohrstutzenförmigen Auslass abdichtend an. Die Radialdichtung kann sich in axialer Richtung bis ungefähr auf Höhe des freien Endes des Dichtelements oder knapp darüber hinaus von der unteren Stirnscheibe wegerstrecken. Die untere Stirnscheibe kann einstückig mit dem Dichtelement und der Radialdichtung ausgebildet sein und insgesamt aus einem thermoplastischen Elastomer bestehen. Wenn versucht würde, den Filtereinsatz auf seiner Unterseite mit der Radialdichtung und dem Dichtelement abzustellen, bestünde daher die Gefahr, dass die Radialdichtung und/oder das Dichtelement beschädigt werden.

Aus WO 2016/004365 A1 ist ein Filtereinsatz bekannt geworden, der eine zentrale Öffnung, ein Dichtelement zum Eingreifen in eine Ablauföffnung eines Standrohrs eines Filtergehäuses und eine um die zentrale Öffnung zumindest teilweise umlaufende Rippe aufweist. Bei dem Dichtelement ist die Rippe unterbrochen, um das Eingreifen des Dichtelements in die Ablauföffnung zu ermöglichen. Radial innerhalb der umlaufenden Rippe weist der Filtereinsatz eine die zentrale Öffnung ringförmig umgebende Aufnahme für eine Ringdichtung auf. Die Ringdichtung ist einstückig mit dem Dichtelement ausgebildet. Die Aufnahme weist eine Durchführung für einen Verbindungsabschnitt zwischen dem Dichtelement und der Ringdichtung auf. In axialer Richtung übergreift die Aufnahme die Ringdichtung und ragt über die umlaufende Rippe hinaus. Die umlaufende Rippe und die Aufnahme für die Ringdichtung sind einstückig miteinander ausgebildet und mit dem Filtereinsatz verschraubt. Dieser Filtereinsatz weist einen komplexen Aufbau mit einer Vielzahl von gegeneinander abzudichtenden Komponenten auf.

Die Dokumente WO 2009 083285 A1 und EP2703065 A1 offenbaren ein Filterelement mit einem Verschlusselement und mindestens einer Positionierhilfe.

Es ist Aufgabe der Erfindung, ein einfach und rationell herstellbares Filterelement mit einem vor Beschädigungen geschützten Verschlusselement für einen Leerlaufkanal eines Filterkopfs anzugeben. Die erfindungsgemäße Aufgabe wird durch ein Filterelement mit den in Anspruch 1 angegebenen Merkmalen gelöst. Bevorzugte Weiterbildungen der Erfindung sind in den Unteransprüchen und der Beschreibung angegeben.

### Offenbarung der Erfindung

Das Filterelement weist erfindungsgemäß eine Standhilfe auf, die sich von der Stirnseite des Filterelements bis auf Höhe des freien Endes des Verschlusselements oder über das freie Ende des Verschlusselements hinaus in axialer Richtung wegerstreckt. Durch eine solche Standhilfe kann das Filterelement ungeachtet der durch das Verschlusselement bedingten Störkontur mit seiner das Verschlusselement aufweisenden Stirnseite nach unten weisend auf einer Auflagefläche, insbesondere einem Fließband, positioniert werden. Darüber hinaus kann durch die Standhilfe ein Schutz des Verschlusselements gegenüber einer mechanischen Beschädigung während des Fertigungs- und Verpackungsprozesses sowie beim Transport gewährleistet werden. So kann einem Abreißen bzw. Abscheren des Verschlusselements vom Filterelement entgegengewirkt werden. Insbesondere kann in dem Fall, dass das Verschlusselement ein elastomeres Dichtungselement umfasst oder aus einem Elastomer gebildet ist, eine nachteilige Verletzung des empfindlichen Elastomermaterials vermieden werden. Dadurch wird einer Beeinträchtigung des Dichtvermögens des Verschlusselements entgegengewirkt. Hierdurch können durch die erfindungsgemäße Standhilfe auch weitere Bauteile des Filterelements gegenüber einer mechanischen Beschädigung geschützt werden. Erfindungsgemäß ist die Standhilfe mit dem Filterelement verrastet. Dies erlaubt eine besonders einfache und kostengünstige Fertigung des Filterelements. Eine solche Rastverbindung der Standhilfe und des Filterelements kann zudem lösbar ausgeführt sein, um das Filterelement ggf. an Filterköpfen bzw. in einem Gehäuseteil montieren zu können, die den Einsatz eines Filterelements mit einer solchen Standhilfe nicht zulassen. Das Filterelement kann einen Filtereinsatz mit einem Filtermedium aufweisen. Die Verrastung ist vorteilhaft so ausgeführt, dass die Standhilfe relativ zu dem Filtereinsatz mit dem Filtermedium um eine Längsachse des Filterelements drehbar ist, insbesondere ohne dass sich die axiale Position der Standhilfe relativ zum Filtereinsatz mit dem Filtermedium beim Drehen ändert.

Das erfindungsgemäße Filterelement kann dank der Standhilfe auf seiner mit dem Verschlusselement versehenen Stirnseite positioniert werden, ohne umzufallen. Dadurch ist das Filterelement gut fließbandfähig, was insbesondere bei einer rationellen Massenfertigung solcher Filterelemente von Vorteil ist. Darüber hinaus wird das Verschlusselement, das zwecks eines ausreichenden Dichtungsvermögens vorteilhaft ein Dichtungselement aus einem Elastomer umfassen kann bzw. aus einem Elastomer bestehen kann, während der Fertigung, des Verpackungsprozesses, Transports und der Montage des Filterelements durch die Standhilfe vor Beschädigungen geschützt. Die Standhilfe selbst ist typischerweise stabil ausgebildet, so dass sie nicht leicht beschädigt wird. Sollte die Standhilfe dennoch beschädigt werden, so bleibt das Filterelement typischerweise trotzdem funktionsfähig, da die Standhilfe insbesondere keine Abdichtungsfunktion besitzt. Durch die Verrastung kann die Standhilfe besonders einfach mit dem Filterelement verbunden werden. Durch die Verrastung kann zudem in vorteilhafter Weise eine Drehbarkeit der Standhilfe um die Längsachse eingerichtet werden, wobei sich die Axialposition der Standhilfe am Filterelement beim Drehen nicht verändert.

Nach einer bevorzugten Weiterbildung der Erfindung ist die Standhilfe zylinderförmig ausgebildet. Die Standhilfe weist in diesem Fall mit anderen Worten die Form eines Ringstutzens bzw. einer Hülse auf. Bei dieser Ausgestaltung der Standhilfe kann die Standhilfe gegenüber mechanischen Belastungen besonders robust ausgeführt werden. Darüber hinaus kann die Montage der Standhilfe am Filterelement vereinfacht werden. Die Standhilfe kann zur Längsachse des Filterelements insbesondere koaxial angeordnet sein.

Die Standhilfe kann nach der Erfindung einen stufenfrei ausgeführten freien Rand oder, bevorzugt, einen gewellten bzw. gestuft ausgeführten freien Rand aufweisen. In den beiden letztgenannten Fällen kann unerwünschten Adhäsionskräften der Standhilfe an einer Auflagefläche, insbesondere bei Feuchte, entgegengewirkt werden. Darüber hinaus kann dadurch der für die Fertigung der Standhilfe erforderliche Materialeinsatz minimiert werden.

Die Standhilfe weist nach einer bevorzugten Weiterbildung der Erfindung mehrere zahn- oder zackenförmige Profilfortsätze auf, die in Umfangsrichtung des Filterelements voneinander beabstandet angeordnet sind. Die Profilfortsätze können insbesondere zueinander parallel verlaufend am Filterelement angeordnet sein. Dadurch ergibt sich eine insgesamt kronenförmige Formgebung der Standhilfe. Im Hinblick auf eine ausreichende Standsicherheit des Filterelements ermöglicht die Standhilfe bevorzugt zumindest eine Dreipunktlagerung des Filterelements auf einer Auflagefläche.

Das Filterelement kann an seiner mit dem Verschlusselement versehenen Stirnseite ein Ringdichtungselement aufweisen. Ein solches Ringdichtungselement ermöglicht einen Dichtsitz des Filterelements am Filterkopf.

Das Verschlusselement kann nach der Erfindung in radialer Richtung außerhalb der Standhilfe angeordnet sein. Die Standhilfe ist in diesem Fall mit anderen Worten in radialer Richtung innerhalb einer die Längsachse umgreifenden Kreislinie angeordnet, auf der das Verschlusselement angeordnet ist. Dadurch kann die Standhilfe mit einem besonders geringen Materialeinsatz realisiert werden. Im Hinblick auf einen möglichst kippsicheren Stand des Filterelements hat sich jedoch eine Ausführung der Erfindung als besonders vorteilhaft erwiesen, bei der das Verschlusselement in radialer Richtung innerhalb der Standhilfe angeordnet ist. Bei dieser Ausführungsform umgreift die Standhilfe somit das Verschlusselement in radialer Richtung. Dadurch kann das Verschlusselement gegenüber Beschädigungen besonders zuverlässig geschützt werden.

Das vorgenannte Ringdichtungselement kann außerhalb oder innerhalb der Standhilfe angeordnet sein. Im erstgenannten Fall ist die Standhilfe in radialer Richtung vorzugsweise von dem Ringdichtungselement nicht oder nur geringfügig beabstandet, um auch dem Ringdichtungselement Schutz vor mechanischer Beschädigung bieten zu können.

Die Standhilfe kann erfindungsgemäß am Filterelement um die Längsachse des Filterelements rotatorisch verstellbar sein, vorzugsweise relativ zu einem Filtereinsatz des Filterelements und insbesondere bei konstanter Axialposition der Standhilfe relativ zu dem Filtereinsatz. Dies kann insbesondere in dem Fall, dass die Standhilfe einen gestuft ausgeführten Randbereich aufweist bzw. aus mehreren voneinander beabstandet angeordneten Segmenten besteht, einen Anbau des Filterelements am Filterkopf bzw. einem Einbau des Filterelements in einem Gehäuseteil mit einem solchen Filterkopf erleichtern. Ist das Verschlusselement an einem Tragring angeordnet, der am Filterelement um die Längsachse des Filterelements rotierbar gelagert ist, kann die Standhilfe auch an dem Tragring befestigt, insbesondere angeformt, sein. In diesem Fall sind somit der Tragring und die Standhilfe gemeinsam um die Längsachse des Filterelements rotatorisch verstellbar.

Die Standhilfe kann im Hinblick auf möglichst günstige Fertigungskosten des Filterelements einstückig ausgeführt sein. Besonders bevorzugt ist die Standhilfe dabei als Kunststoffspritzgussteil ausgeführt.

Das Filterelement kann nach der Erfindung als Filtereinsatz für ein öffenbares Gehäuseteil ausgeführt sein, das den Filterkopf und einen am Filterkopf befestigbaren Gehäusedeckel umfasst. Das Filterelement weist in diesem Fall kein eigenständiges Gehäuse auf, mit dem das Filterelement eine Baueinheit bildet. Bei dieser Bauart ist die Standhilfe vorzugsweise mit einer Endscheibe des Filtereinsatzes verrastet.

Nach einer alternativen Ausführungsform kann das Filterelement auch als sog. Wechselfilterpatrone ausgeführt sein, die auch als Wechselfilterkartusche bezeichnet wird. Bei dieser Bauart weist das Filterelement ein Filtergehäuse auf, das mit einem Gewindeanschluss für den Filterkopf versehen ist. Die Wechselfilterpatrone kann dadurch unmittelbar in ein zum Gewindeanschluss korrespondierendes Gegengewinde des Filterkopfs eingeschraubt werden. Die Wechselfilterpatrone wird bei deren Austausch als Ganzes entsorgt. Bei dieser Bauart ist die Standhilfe typischerweise mit einem Deckelabschnitt des Filtergehäuses verrastet.

Nach einer bevorzugten Weiterbildung der Erfindung kann das Verschlusselement an einem Tragring angeordnet sein, der am Filterelement um die Längsachse des Filterelements rotierbar gelagert ist. Dadurch kann das Verschlusselement des Filterelements, insbesondere bei dessen Ausführung als Wechselfilterpatrone, vereinfacht in eine vorgegebene Montageposition am Filterkopf positioniert werden, in der das Verschlusselement den Leerlaufkanal des Filterkopfs fluiddicht verschließt. Vorzugsweise ist der Tragring in axialer Richtung lagefixiert am Filterelement gehalten. Die rotatorische Ausrichtung des Tragrings und des Verschlusselements relativ zu dem Filterelement kann dann bei konstanter Axialposition eingestellt werden.

Der Tragring kann zumindest einen ersten Positionierpin aufweisen, über den der Tragring bei der Montage des Filterelements am Filterkopf in einer zum Leerlaufkanal axial fluchtenden Drehposition ausrichtbar ist. Der Filterkopf weist dazu vorzugsweise ein Anschlagelement für den Positionierpin auf. Typischerweise ist vorgesehen, dass sich der erste Positionierpin in axialer Richtung von dem Tragring wegerstreckt. Dadurch kann der erste Positionierpin beim Montieren des Filterelements an dem Filterkopf besonders einfach in Eingriff mit dem Anschlagelement gebracht werden.

Es kann vorgesehen sein, dass sich weiterhin ein zweiter Positionierpin in axialer Richtung vom Tragring wegerstreckt, der in Umfangsrichtung des Filterelements beabstandet vom ersten Positionierpin angeordnet ist. Mit dem zweiten Positionierpin kann die Drehstellung des Verschlusselements insbesondere beim Demontieren des Filterelements von dem Filterkopf gesichert werden. Vorzugsweise überragt der erste Positionierpin den zweiten Positionierpin in axialer Richtung. Dadurch kann eingerichtet werden, dass beim Montieren des Filterelements am Filterkopf zuerst der erste Positionierpin in Eingriff mit einem Anschlagelement kommt und dass beim Demontieren zuerst der zweite Positionierpin außer Eingriff kommt.

Die Erfindung wird nachstehend anhand von in der Zeichnung wiedergegebenen Ausführungsbeispielen erläutert.

### Kurze Beschreibung der Zeichnungen

In der Zeichnung zeigen:
- Fig. 1: ein als Wechselfilterpatrone ausgeführtes Filterelement mit einem stirnseitig an einem Tragring exzentrisch angeordneten Verschlusselement und einer stirn-seitig angeordneten Standhilfe, die sich in Richtung der Längsachse des Filter-elements über das Verschlusselement hinaus vom Filterelement wegerstreckt, in einer perspektivischen Ansicht;
- Fig. 2: das Filterelement gemäß Fig. 1 in einer Seitenansicht;
- Fig. 3: das Filterelement gemäß Fig. 1 in einer teilweise explodierten Darstellung seiner Teile;
- Fig. 4: ein zum Filterelement gemäß Fig. 1 ähnliches Filterelement mit einer kleineren Standhilfe, die in radialer Richtung innerhalb des Tragrings angeordnet ist; und
- Fig. 5: das Filterelement gemäß Fig. 4, in einer ausschnittsweisen perspektivischen Detailansicht.

### Ausführungsform(en) der Erfindung

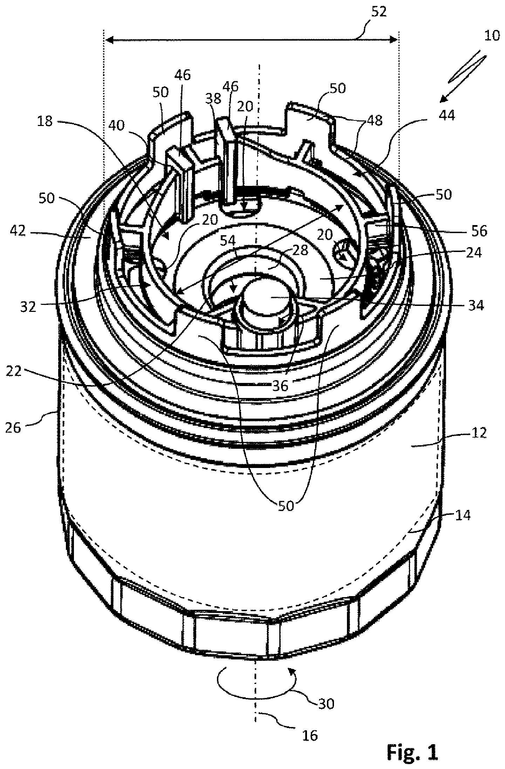

Fig. 1 zeigt ein Filterelement 10 zum Filtern eines Fluids, insbesondere von Schmieröl für den Verbrennungsmotor eines Kraftfahrzeugs, das hier in Form einer Wechselfilterpatrone ausgebildet ist. Derlei Wechselfilterpatronen werden auch als Wechselfilterkartuschen oder Wechselfilterelemente bezeichnet. Das Filterelement 10 umfasst mithin ein Filtergehäuse 12 aus Metall oder Kunststoff und einen im Filtergehäuse 12 unverlierbar angeordneten Filtereinsatz 14 mit einem Filtermedium, der in Fig. 1 lediglich stark schematisiert mit gestrichelter Linie dargestellt ist. Die Längsachse des Filterelements 10 ist mit 16 bezeichnet.

Das Filterelement 10 weist eine Stirnseite 18 mit mehreren Einlassöffnungen 20 für das zu filternde Fluid und mit einer einzelnen zentral angeordneten Auslassöffnung 22 für das gefilterte Fluid auf. Die Einlassöffnungen 20 sind hier beispielhaft voneinander beabstandet ringförmig um die Längsachse 16 herum angeordnet. Die Einlassöffnungen 20 sowie die Auslassöffnung 22 sind in einem Deckelabschnitt 24 des Filtergehäuses 12 ausgebildet. Der Deckelabschnitt 24 ist randseitig mit einem Seitenwandabschnitt 26 des Filtergehäuses 12 verbördelt oder in anderer Weise fluiddicht verbunden. Zum Einschrauben des Filterelements 10 in ein Gewinde eines Filterkopfs (nicht gezeigt) dient ein Schraubgewinde 28. Eine Einschraubrichtung des Filterelements 10 ist mit 30 bezeichnet.

Ein Tragring 32 ist um die Längsachse 16 des Filterelements 10 rotierbar am Filterelement 10 befestigt. Der Tragring 32 ist in axialer Richtung am Filterelement 10 lagefixiert gehalten und kann beispielsweise mit dem Deckelabschnitt 24 des Filtergehäuses 12 unmittelbar verhakt sein. Am Tragring 32 ist ein Verschlusselement 34 angeordnet, das dem Verschließen eines Leerlaufkanals eines Filterkopfs (nicht gezeigt) dient, an dem das Filterelement 10 im Filterbetrieb angeschlossen ist. Das Verschlusselement 34 besteht zwecks eines zuverlässigen Dichtvermögens vorteilhaft aus einem Elastomer oder umfasst ein elastomeres Dichtungselement. Das Verschlusselement 34 kann in einer Aufnahme 36 des Tragrings 32 gehalten sein. Das Verschlusselement 34 kann an den Tragring 32 alternativ auch angeformt, angespritzt oder in anderer Weise am Tragring 32 befestigt sein.

Vom Tragring 32 kann sich ein erster Positionierpin 38 in axialer Richtung wegerstrecken. Der erste Positionierpin 38 dient dazu, den Tragring 32 beim Einschrauben der Wechselfilterpatrone in das Gewinde des Filterkopfs mit seinem Verschlusselement 34 in einer Drehlage zu arretieren, in der das Verschlusselement 34 zur Öffnung des Leerlaufkanals des Filterkopfs axial fluchtend ausgerichtet ist. Der Filterkopf weist dazu ein Anschlagelement (nicht gezeigt) für den ersten Positionierpin 38 auf, durch den ein weiteres Mitdrehen des Tragrings 32 in Einschraubrichtung 30 des Filterelements 10 unterbunden ist. Um das Verschlusselement 34 beim Einschrauben dem Leerlaufkanal des Filterkopfs in axialer Richtung kontrolliert anzunähern, ist der Tragring 32 hier relativ zu dem Filtergehäuse 12 und zu dem Filtereinsatz 14 des Filterelements 10 drehbar, ohne dass sich seine Axialposition relativ zu dem Filtergehäuse 12 und zu dem Filtereinsatz 14 ändert.

Vom Tragring 32 kann sich darüber hinaus ein zweiter Positionierpin 40 in axialer Richtung wegerstrecken. Der zweite Positionierpin 40 ist in Umfangsrichtung des Filterelements 10 vom ersten Positionierpin 38 beabstandet angeordnet. Der erste Positionierpin 38 überragt den zweiten Positionierpin 40 in axialer Richtung. Der zweite Positionierpin 40 erlaubt beim vollständigen Einschrauben des Filterelements 10 in das Gewinde des Filterkopfs eine nochmals weiter verbesserte Führung des Verschlusselements 34 in axialer Richtung, um einem Verkanten des Verschlusselements 34 am Öffnungsrand des Leerlaufkanals (nicht gezeigt) entgegenzuwirken. Darüber hinaus kann durch ein Anschlagen des zweiten Positionierpins 40 am Anschlagelement des Filterkopfs einer Querbelastung des Verschlusselements 34 sowie dessen Abscheren vom Tragring 32 beim erneuten Lösen des Filterelements 10 vom Filterkopf entgegengewirkt werden. Für eine dichtende Anlage des Filterelements 10 am Filterkopf dient ein Ringdichtungselement 42, das stirnseitig am Filterelement 10 befestigt ist. Das Ringdichtungselement 42 kann aus einem gummielastisch oder zähelastisch verformbaren Material bestehen.

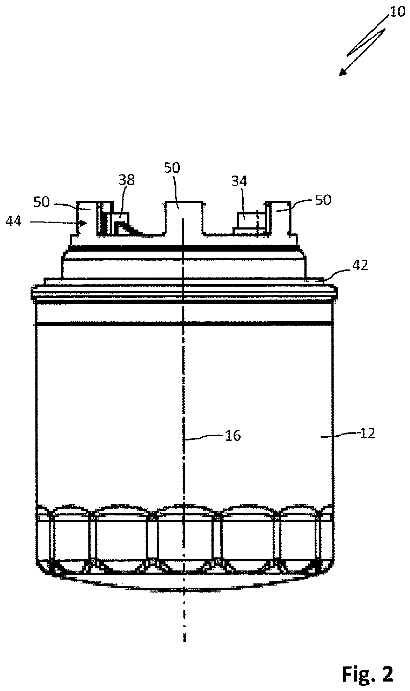

Am Filterelement 10 ist stirnseitig eine Standhilfe 44 angeordnet, die einen sicheren Stand des Filterelements 10 mit nach unten weisender anschlussseitiger Stirnseite 18 auf einer Auflagefläche (nicht gezeigt) ermöglicht. Dadurch kann die Handhabung des Filterelements 10 bei dessen Fertigung und Verpackung für Versand und Lagerung vereinfacht werden. Die Standhilfe 44 erstreckt sich dazu in axialer Richtung zumindest bis auf Höhe des freien Endes 46 des Verschlusselements 34 und, sofern vorhanden, des bzw. der Positionierpins 38, 40 vom Filterelement 10 weg oder überragt die vorgenannten Bauteile, wie dies in Fig. 2 gezeigt ist. Die Standhilfe 44 ist bei dieser Ausführungsform in radialer Richtung außerhalb des Verschlusselements 34 angeordnet, so dass das Verschlusselement 34 und hier zusätzlich auch die beiden Positionierpins 38, 40 von der Standhilfe 44 schützend umgriffen werden. Dadurch können das Verschlusselement 34 und auch die Positionierpins 38, 40 gegenüber einer mechanischen Überbeanspruchung bzw. Beschädigung besonders zuverlässig geschützt werden. Dies ist insbesondere beim Fertigungs- und Verpackungsprozess, aber auch beim Transport sowie der Entnahme des Filterelements 10 aus seiner Umverpackung bzw. bei der Montage des Filterelements 10 am Filterkopf vorteilhaft.

Die Standhilfe 44 ist vorzugsweise einstückig, beispielsweise als ein Kunststoffspritzgussteil, ausgeführt. Die Standhilfe kann zylinderförmig, d. h. in Form einer Hülse, ausgeführt sein und die Längsachse 16 des Filterelements 10 insbesondere ringförmig umgreifen. Ein freier Rand 48 der Standhilfe kann dabei stufenfrei, gewellt oder, wie dies bei dem in Figuren 1 bis 3 gezeigten Ausführungsbeispiel der Fall ist, gestuft ausgeführt sein. Im letztgenannten Fall weist die Standhilfe 44 somit eine kronenförmige Gestalt mit zumindest drei voneinander in Umfangsrichtung des Filterelements 10 beabstandet angeordneten zinken- oder zahnförmigen Axialfortsätzen 50 auf. Durch den gestuften freien Rand 48 der Standhilfe 44 kann diese auch bei Feuchte bzw. Nässe, insbesondere während der Fertigung, vereinfacht von einer Auflagefläche aufgenommen werden. Mit anderen Worten wird einer unerwünschten Adhäsion der Standhilfe 44 an der Auflagefläche entgegengewirkt. Darüber hinaus wird bei dieser Ausgestaltung der Materialeinsatz für die Standhilfe 44 minimiert.

Die Standhilfe 44 kann gemäß dem in Figuren 1 bis 3 gezeigten Ausführungsbeispiel in radialer Richtung zwischen der außenliegenden Ringdichtung und dem Tragring 32 angeordnet sein. Die Standhilfe 44 weist mithin einen Außendurchmesser 52 auf, der größer ist als der Durchmesser 54 des Tragrings 32. Dadurch kann ein besonders kippstabiler Stand des Filterelements 10 auf der Standhilfe 44 erreicht werden. Darüber hinaus bietet die Standhilfe 44 in diesem Fall einen besonders zuverlässigen Schutz des bezüglich der Standhilfe 44 radial außenliegenden Ringdichtungselements 42, insbesondere auch im Falle eines Umkippens des Filterelements 10.

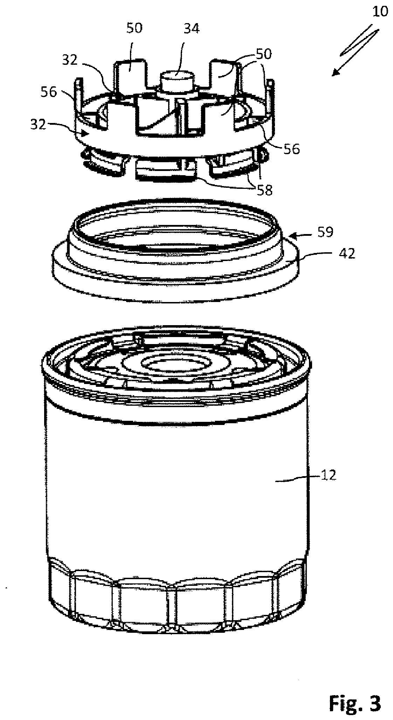

Die Standhilfe 44 ist mit dem Filterelement 10 verrastet, hier mit dem Deckelabschnitt 24. Die Standhilfe 44 kann dabei als ein zum Tragring 32 separates Bauteil ausgeführt sein oder (wie hier dargestellt) am Tragring 32 über Verbindungselemente 56 befestigt sein, insbesondere angeformt, um eine möglichst einfache und kostengünstige Fertigung des Filterelements 10 zu ermöglichen. In letztgenanntem Fall ist die Standhilfe 44 mithin gemeinsam mit dem Tragring 32 am Filterelement 10 rotierbar befestigt. Der Tragring 32 kann seinerseits mit dem Filterelement 10 stirnseitig verhakt, d. h. an diesem verrastet gehalten sein, und weist hierzu dann geeignete Hakenelemente 58 auf, wie dies in Fig. 3 gezeigt ist. In diesem Fall ist die Standhilfe 44 über den mit ihr einstückig ausgebildeten Tragring 32 mit dem Filterelement 10, hier mit dessen Deckelabschnitt 24, verrastet. Das Ringdichtungselement 42 kann insbesondere an einem Dichtungstragring 59 befestigt sein. Es versteht sich, dass das Ringdichtungselement 42 auch radial weiter innenliegend angeordnet sein kann, als dies in Figuren 1 bis 3 gezeigt ist.

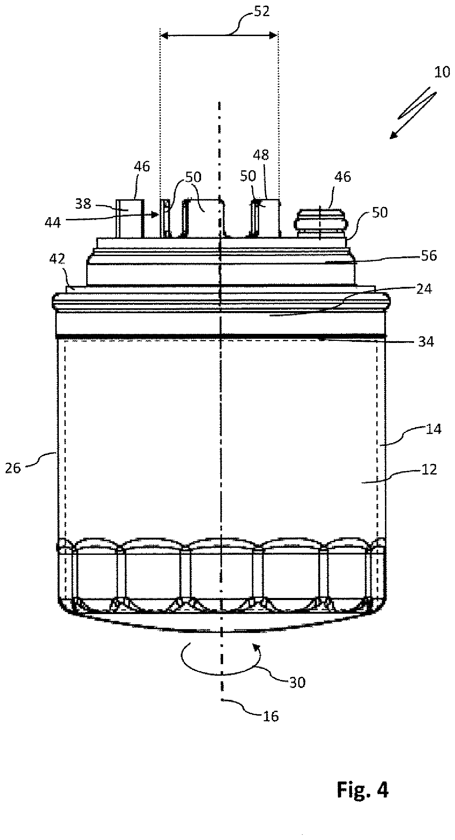

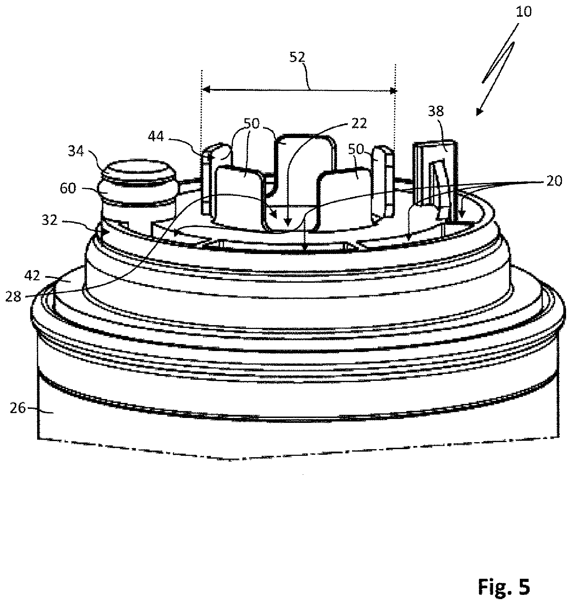

In Figuren 4 und 5 ist eine weitere Ausführungsform eines Filterelements 10 gezeigt, das sich von dem vorstehend im Zusammenhang mit Figuren 1 bis 3 gezeigten Filterelement 10 im Wesentlichen darin unterscheidet, dass die Standhilfe 44 in radialer Richtung innerhalb des Tragrings 32 sowie des Verschlusselements 34 angeordnet ist. Das Verschlusselement 34 ist somit in radialer Richtung außerhalb der Standhilfe 44 angeordnet. Die Standhilfe 44 weist somit einen gegenüber dem Durchmesser 54 des Tragrings 32 kleineren Außendurchmesser 52 auf. Das Verschlusselement 34 kann ein ringförmiges (Radial-)Dichtungselement 60 aufweisen, das vorzugsweise aus einem Elastomer besteht.

Das Filterelement 10 kann nach einem in der Zeichnung nicht näher gezeigten Ausführungsbeispiel auch in Form eines Filtereinsatzes für ein öffenbares Gehäuseteil mit einem am Filterkopf lösbar befestigbaren Gehäusedeckel ausgebildet sein.

## Patentansprüche

1. Filterelement (10) zum Filtern eines Fluids, insbesondere von Kraftstoff oder Öl, insbesondere für den Verbrennungsmotor eines Kraftfahrzeugs,
mit einem Verschlusselement (34) zum Verschließen eines Leerlaufkanals eines zum Anschluss des Filterelements (10) vorgesehenen Filterkopfs, das an einer Stirnseite (18) des Filterelements (10) relativ zur Längsachse (16) des Filterelements (10) exzentrisch angeordnet ist und das sich von der Stirnseite (18) des Filterelements (10) in axialer Richtung wegerstreckt,
**dadurch gekennzeichnet,**
**dass** das Filterelement (10) eine mit dem Filterelement (10) verrastete ringförmige Standhilfe (44) aufweist, die sich von der Stirnseite (18) des Filterelements (10) in axialer Richtung bis auf Höhe des freien Endes (46) des Verschlusselements (34) oder über das freie Ende (46) des Verschlusselements (34) hinaus wegerstreckt, so dass, das Filterelement dank der Standhilfe auf seiner mit dem Verschlusselement versehenen Stirnseite positioniert werden kann, ohne umzufallen und das Verschlusselement vor Beschädigung geschützt ist.

2. Filterelement nach Anspruch 1, **dadurch gekennzeichnet, dass** die Standhilfe (44) hülsenförmig ausgebildet ist.

3. Filterelement nach Anspruch 1 oder 2, **dadurch gekennzeichnet, dass** die Standhilfe (44) einen stufenfreien, gewellten oder gestuft ausgeführten freien Rand (48) aufweist.

4. Filterelement nach einem der vorhergehenden Ansprüche, **dadurch gekennzeichnet, dass** die Standhilfe (44) zwei oder mehr zinken- oder zahnförmige Axialfortsätze (50) aufweist, die in Umfangsrichtung des Filterelements (10) voneinander beabstandet angeordnet sind.

5. Filterelement nach einem der Ansprüche 1 bis 4, **dadurch gekennzeichnet, dass** das Verschlusselement (34) in radialer Richtung außerhalb der Standhilfe (44) angeordnet ist.

6. Filterelement nach einem der Ansprüche 1 bis 4, **dadurch gekennzeichnet, dass** das Verschlusselements (34) in radialer Richtung innerhalb der Standhilfe (44) angeordnet ist.

7. Filterelement nach einem der vorhergehenden Ansprüche, **dadurch gekennzeichnet, dass** die Standhilfe (44) um die Längsachse (16) des Filterelements (10) rotatorisch verstellbar ist, vorzugsweise relativ zu einem Filtereinsatz (14) des Filterelements (10) und insbesondere bei konstanter Axialposition der Standhilfe (44) relativ zu dem Filtereinsatz (14).

8. Filterelement nach Anspruch 7, **dadurch gekennzeichnet, dass** die Standhilfe (44) an einem Tragring (32) des Filterelements (10) angeformt ist, der das Verschlusselement (34) aufweist und welcher am Filterelement (10) rotierbar befestigt ist, vorzugsweise wobei der Tragring (32) in axialer Richtung lagefixiert am Filterelement (10) gehalten ist.

9. Filterelement nach Anspruch 8, **dadurch gekennzeichnet, dass** der Tragring (32) mit zumindest einem ersten Positionierpin (38) versehen ist.

10. Filterelement nach Anspruch 9, **dadurch gekennzeichnet, dass** sich der erste Positionierpin (38) in axialer Richtung von dem Tragring (32) wegerstreckt.

11. Filterelement nach Anspruch 10, **dadurch gekennzeichnet, dass** sich weiterhin ein zweiter Positionierpin (40) in axialer Richtung vom Tragring (32) wegerstreckt, der in Umfangsrichtung des Filterelements (10) beabstandet vom ersten Positionierpin (38) angeordnet ist, vorzugsweise wobei der erste Positionierpin (38) den zweiten Positionierpin (40) in axialer Richtung überragt.

12. Filterelement nach einem der vorhergehenden Ansprüche, **dadurch gekennzeichnet, dass** die Standhilfe (44) einstückig, bevorzugt als Kunststoffspritzgussteil, ausgeführt ist.

13. Filterelement nach einem der vorhergehenden Ansprüche, **dadurch gekennzeichnet, dass** das Filterelement (10) als eine Wechselfilterpatrone mit einem Filtergehäuse (12) und einem darin fest integrierten Filtereinsatz (14) ausgeführt ist, die an ihrer Stirnseite (18) ein Schraubgewinde (28) für den Anschluss an einen Filterkopf aufweist.

## Claims

1. Filter element (10) for filtering a fluid, in particular fuel or oil, in particular for the internal combustion engine of a motor vehicle,
having a closure member (34) for closing a drainage channel of a filter head provided for the connection of the filter element (10), which closing member is eccentrically disposed on a front face (18) of the filter element (10) relative to the longitudinal axis (16) of the filter element (10) and extends away from the front face (18) of the filter element (10) in the axial direction,
**characterized in that**
the filter element (10) features an annular standing aid (44) snap-connected to the filter element (10), which standing aid extends away from the front face (18) of the filter element (10) in the axial direction up to the level of the free end (46) of the closure member (34) or beyond the free end (46) of the closure member (34) so that, thanks to the standing aid, the filter element can be positioned on its front face provided with the closure member without falling over and the closure member is protected against damages.

2. Filter element according to claim 1, **characterized in that** the standing aid (44) is sleeve-shaped.

3. Filter element according to claim 1 or 2, **characterized in that** the standing aid (44) features a stepless, wavy or stepped free edge (48).

4. Filter element according to one of the preceding claims, **characterized in that** the standing aid (44) features two or more tine-shaped or tooth-shaped axial extensions (50) which are spaced apart from each other in the circumferential direction of the filter element (10).

5. Filter element according to one of the claims 1 to 4, **characterized in that** the closure member (34) is disposed in the radial direction outside the standing aid (44).

6. Filter element according to one of the claims 1 to 4, **characterized in that** the closure member (34) is disposed in the radial direction inside the standing aid (44).

7. Filter element according to one of the preceding claims, **characterized in that** the standing aid (44) is rotationally adjustable around the longitudinal axis (16) of the filter element (10), preferably relative to a filter cartridge (14) of the filter element (10) and in particular with a constant axial position of the standing aid (44) relative to the filter cartridge (14).

8. Filter element according to claim 7, **characterized in that** the standing aid (44) is integrally molded to a supporting ring (32) of the filter element (10), which supporting ring features the closure member (34) and which is rotatably attached to the filter element (10), preferably the supporting ring (32) being fixed in position on the filter element (10) in the axial direction.

9. Filter element according to claim 8, **characterized in that** the supporting ring (32) is at least provided with a first positioning pin (38).

10. Filter element according to claim 9, **characterized in that** the first positioning pin (38) extends in the axial direction away from the supporting ring (32).

11. Filter element according to claim 10, **characterized in that** furthermore a second positioning pin (40) extends in the axial direction away from the supporting ring (32), which is in the circumferential direction of the filter element (10) spaced apart from the first positioning pin (38), preferably the first positioning pin (38) projecting beyond the second positioning pin (40) in the axial direction.

12. Filter element according to one of the preceding claims, **characterized in that** the standing aid (44) is realized in one piece, preferably as a plastic injection molded part.

13. Filter element according to one of the preceding claims, **characterized in that** the filter element (10) is designed as a replaceable filter cartridge having a filter housing (12) and a filter cartridge (14) firmly integrated therein, which replaceable filter cartridge features on its front face (18) a screw thread (28) for the connection to a filter head.

## Revendications

1. Élément filtrant (10) destiné à filtrer un fluide, notamment du carburant ou de l'huile, notamment pour le moteur à combustion interne d'un véhicule automobile,
ayant un élément de fermeture (34) destiné à fermer un canal de vidange d'une tête de filtre prévue pour raccorder l'élément filtrant (10), lequel élément de fermeture est disposé de manière excentrique sur une face frontale (18) de l'élément filtrant (10) par rapport à l'axe longitudinal (16) de l'élément filtrant (10) et s'étend en direction axiale en s'écartant de la face frontale (18) de l'élément filtrant (10),
**caractérisé en ce que**
l'élément filtrant (10) présente une aide à la position debout (44) en forme annulaire encliquetée sur l'élément filtrant (10), laquelle aide à la position debout s'étend en s'écartant de la face frontale (18) de l'élément filtrant (10) en direction axiale jusqu'au niveau de l'extrémité libre (46) de l'élément de fermeture (34) ou au-delà de l'extrémité libre (46) de l'élément de fermeture (34) de sorte que l'élément filtrant peut être positionné grâce à l'aide à la position debout sur sa face frontale pourvue de l'élément de fermeture sans tomber et l'élément de fermeture est protégé contre les dommages.

2. Élément filtrant selon la revendication 1, **caractérisé ce que** l'aide à la position debout (44) est réalisée en forme de douille.

3. Élément filtrant selon la revendication 1 ou 2, **caractérisé en ce que** l'aide à la position debout (44) présente un bord libre (48) sans marche, ondulé ou étagé.

4. Élément filtrant selon l'une quelconque des revendications précédentes, **caractérisé en ce que** l'aide à la position debout (44) présente deux ou plusieurs prolongements axiaux (50) en forme de griffes ou en forme de dents disposés en direction circonférentielle de l'élément filtrant (10) et espacés les uns des autres.

5. Élément filtrant selon l'une des revendications 1 à 4, **caractérisé en ce que** l'élément de fermeture (34) est disposé en direction radiale à l'extérieur de l'aide à la position debout (44).

6. Élément filtrant selon l'une des revendications 1 à 4, **caractérisé en ce que** l'élément de fermeture (34) est disposé en direction radiale à l'intérieur de l'aide à la position debout (44).

7. Élément filtrant selon l'une quelconque des revendications précédentes, **caractérisé en ce que** l'aide à la position debout (44) est réglable en rotation autour de l'axe longitudinal (16) de l'élément filtrant (10), de préférence par rapport à une cartouche filtrante (14) de l'élément filtrant (10) et notamment par rapport à la cartouche filtrante (14) lors d'une position axiale constante de l'aide à la position debout (44).

8. Élément filtrant selon la revendication 7, **caractérisé en ce que** l'aide à la position debout (44) est moulée sur un anneau porteur (32) de l'élément filtrant (10), lequel anneau porteur présente l'élément de fermeture (34) et qui est monté de manière rotative sur l'élément filtrant (10), de préférence l'anneau porteur (32) étant maintenu en position fixe sur l'élément filtrant (10) en direction axiale.

9. Élément filtrant selon la revendication 8, **caractérisé ce que** l'anneau porteur (32) est doté au moins d'une première goupille de positionnement (38).

10. Élément filtrant selon la revendication 9, **caractérisé ce que** la première goupille de positionnement (38) 's'étend en direction axiale en s'écartant de l'anneau porteur (32).

11. Élément filtrant selon la revendication 10, **caractérisé en ce qu'en** outre une seconde goupille de positionnement (40) s'étend en direction axiale en s'écartant de l'anneau porteur (32) qui est disposé en direction circonférentielle de l'élément filtrant (10) à une certaine distance de la première goupille de positionnement (38), de préférence la première goupille de positionnement (38) dépassant la seconde goupille de positionnement (40) en direction axiale.

12. Élément filtrant selon l'une quelconque des revendications précédentes, **caractérisé en ce que** l'aide à la position debout (44) est exécuté d'un seul tenant, de préférence en tant que pièce en matière plastique moulée par injection.

13. Élément filtrant selon l'une quelconque des revendications précédentes, **caractérisé en ce que** l'élément filtrant (10) est conçu en tant que cartouche filtrante remplaçable ayant un boîtier de filtre (12) et une cartouche filtrante (14) intégrée de manière fixe dans celui-ci, laquelle cartouche filtrante remplaçable présente sur sa face frontale (18) un filetage (28) destiné au raccordement sur une tête de filtre.
